# FASCICULE DE BREVET EUROPEEN

(11) **EP 4 035 976 B1**
(45) Date de publication et mention de la délivrance du brevet: **26.11.2025**
(21) Numéro de dépôt: 22153785.5
(22) Date de dépôt: 27.01.2022
(51) Int. Cl.: B62H 5/00, B62J 7/04

(54) **PORTE-BAGAGE MULTIFONCTIONS POUR CYCLE**
MULTIFUNKTIONALER FAHRRADGEPÄCKTRÄGER
MULTIFUNCTIONAL LUGGAGE RACK FOR CYCLE

(30) Priorité: 28.01.2021 FR 2100805; 21.09.2021 FR 2109924
(43) Date de publication de la demande: 03.08.2022
(73) Titulaire: NP Innovation, 42600 Montbrison (FR)
(72) Inventeur: PEYTOUR, Norbert, 42600 MONTBRISON (FR); MARSILLE, Nicolaas, 42600 ESSERTINES EN CHATELNEUF (FR)
(74) Mandataire: Ipsilon

(56) Documents cités:
- EP-A2- 2 261 108
- WO-A1-2020/171927
- CN-U- 204 137 172
- DE-A1- 4 320 240
- DE-A1- 4 336 450
- FR-A1- 2 975 069
- JP-A- H10 152 079
- KR-A- 20170 037 033
- US-A- 4 271 690

## Description

### Domaine technique

L'invention se rapporte au domaine technique des cycles, et en particulier des porte-bagages équipant des cycles.

### Art antérieur

Il est connu de l'art antérieur des porte-bagages pouvant être montés à l'avant ou à l'arrière de cycles.

Il est également connu différents types d'antivol pour cycles, qui sont généralement amovibles. Ceux-ci présentent l'inconvénient d'être des objets externes à la structure du cycle, et dont la seule utilité est d'assurer la fonction d'antivol. Il s'ensuit que ce type d'accessoire alourdit le cycle.

Par ailleurs, hormis le vol du cycle complet, il est fréquent que soient volées des parties du cycle, et en particulier la selle. Le document FR2853616 décrit un antivol de selle présentant l'avantage d'être intégré à la selle et de n'entraîner qu'une augmentation limitée de la masse embarquée sur le cycle. Cependant, cette solution ne donne pas entière satisfaction car le cycle n'est pas fixé à un élément immobile empêchant son déplacement, tel que du mobilier urbain par exemple.

JP H10 152079 A divulgue toutes les caractéristiques du préambule de la revendication 1.

Les documents JPH10152079A, DE4336450A1 et DE4320240A1 décrivent d'autres types d'antivol, mais ils ne donnent pas entière satisfaction.

### Exposé de l'invention

L'un des buts de l'invention est de proposer un porte-bagage pour cycle permettant d'assurer une fonction antivol de cycle.

Un autre objectif de l'invention est de fournir un tel porte-bagage qui assure aussi la fonction de verrouillage de selle.

Un autre objectif de l'invention est aussi de fournir un tel porte-bagage qui assure également la fonction d'antivol de selle.

À cet effet, il a été mis au point un porte-bagage pour cycle tel que défini dans la revendication 1.

Selon l'invention, la structure de réception comprend un espace interne susceptible de recevoir un élément externe tel qu'un poteau de mobilier urbain, et comprend un premier axe escamotable entre une position d'ouverture de l'espace interne autorisant le positionnement de l'élément externe dans l'espace interne et une position de fermeture de l'espace interne, verrouillable pour assurer une fonction antivol du cycle.

De cette manière un même accessoire permet d'avoir deux fonctions, celle de porte-bagage et celle d'antivol du cycle. La masse embarquée par le cycle pour remplir ces deux fonctions est donc limitée. De plus, le porte-bagage ainsi conçu est apte à s'accrocher à un élément fixe, tel que du mobilier urbain ou encore un arbre, de sorte que le cycle est immobilisé de façon sûre, puisqu'il est accroché à un élément inamovible.

Avantageusement, la liaison entre la bague de serrage et la structure de réception est une liaison pivot autour d'un axe de révolution de la bague de serrage, verrouillable en position par des moyens de blocage. De cette façon le porte-bagage est plus facile à manipuler lors de son accroche à un élément externe, notamment par pivotement autour de la bague de serrage. Lorsque la fonction antivol n'est pas utilisée, notamment lors du roulage, la position du porte-bagage est fixée afin de ne pas déséquilibrer le cycliste par de mouvements intempestifs.

Afin de faciliter leur manipulation, les moyens de blocage sont par exemple un levier à serrage rapide, tel qu'un levier à came.

Selon un mode de réalisation non revendiqué, la structure de réception est reliée à la bague de serrage par l'intermédiaire d'une platine, et la structure de réception est reliée à la platine au moyen d'une liaison pivot dont l'axe est orthogonal à l'axe de révolution de la bague de serrage. De cette manière, l'inclinaison entre la structure de réception et la bague de serrage peut être réglée, de sorte que la structure de réception peut être horizontale quelle que soit la géométrie du vélo et l'angle du tube de selle par rapport à l'horizontale.

Dans un mode de réalisation préféré, la bague de serrage est adaptée pour être montée sur un tube de selle d'un cycle, et elle comprend des moyens de serrage pour serrer et déformer le tube de selle afin de verrouiller le montage d'une tige de selle montée dans le tube de selle. Ainsi, la bague de serrage du porte-bagage permet également d'assurer une fonction de verrouillage de la tige de selle du cycle qu'il équipe.

Afin de réaliser aussi une fonction d'antivol de la selle et de la tige de selle, les moyens de serrage sont manipulables uniquement à l'aide d'un outil externe, tel qu'une vis de serrage à six pans creux, ou une vis antivol présentant un profil spécifique.

Selon un mode de réalisation non revendiqué, dans le but de sécuriser encore plus cette fonction d'antivol de selle par la dissimulation des moyens de serrage, la platine coiffe la bague de serrage et présente un orifice destiné à venir, lors du pivotement de la structure de réception, en correspondance avec les moyens de serrage de la bague de serrage pour en autoriser leur manipulation.

Afin d'améliorer sa rigidité et la fixation du premier axe escamotable, la structure de réception présente une première extrémité recevant la bague de serrage et une seconde extrémité prolongée par deux flancs parallèles recevant transversalement le premier axe escamotable, les flancs étant avantageusement renforcés par la présence de joues au niveau de la seconde extrémité.

Selon l'invention, le porte-bagage comprend également un antivol de roue comprenant une ouverture de réception d'une partie d'une roue et un second axe escamotable, apte à passer d'une position de fermeture à une position d'ouverture de l'antivol, l'antivol est configuré pour coiffer la structure de réception dans une position de rangement. De cette manière, le porte bagage sert à la fois d'anti-vol pour le vélo et d'anti-vol pour une roue du vélo. Le rangement astucieux de l'antivol de roue permet de ne pas encombrer le porte bagage en position de rangement.

De préférence, la structure de réception comprend des orifices destinés à recevoir le second axe escamotable afin d'immobiliser l'anti-vol de roue dans la position de rangement.

Pour obtenir un porte bagage et un antivol qui soient légers et simples à fabriquer, la structure de réception et l'antivol sont fabriqués à partir d'un matériau métallique sous forme de plaque, par exemple par découpe puis pliage.

Pour augmenter la charge admissible par le porte bagage, celui-ci comprend un longeron fixé à la bague de serrage, et qui s'étend donc le long de la structure de réception lorsqu'elle se trouve en position de porte-bagage.

Toujours dans ce but, le porte bagage comprend avantageusement des jambes de forces reliées d'une part au longeron, et d'autre part à une partie fixe du cycle, telle que le cadre ou un moyeu de la roue. De préférence, les jambes de force sont amovibles.

Afin de rendre une serrure de l'axe escamotable plus résistante aux tentatives d'effraction, et en particulier aux attaques à la perceuse, la serrure est coiffée par un capuchon délimitant un espace entre la serrure et le capuchon, lequel espace reçoit une pastille présentant une fente pour le passage d'une clé de la serrure. La pastille est en libre rotation au sein de l'espace. Ainsi, la mèche de la perceuse entraine en rotation la pastille, ce qui complique le perçage.

Dans ce même but, l'axe escamotable est monté en libre rotation autour de son axe longitudinal sur la structure de réception, lorsqu'il est en position de fermeture de l'espace interne. De la même manière, une attaque à la perceuse entraîne l'axe en rotation. Pour que la mèche puisse forer la serrure, il faut alors tenir fermement l'axe, ce qui complique le perçage.

L'invention concerne également un procédé de fabrication d'un porte-bagage selon les caractéristiques précitées, dans lequel la structure de réception et l'antivol sont découpées dans une même plaque avant d'être conformés. De cette manière, les chutes de matière première sont limitées, ce qui représente une économie.

L'invention concerne également un cycle équipé d'un tel porte-bagage.

### Brève description des dessins

[Fig.1] est une vue en perspective, vue de dessus, d'un premier mode de réalisation d'un porte-bagage non revendiqué.
[Fig. 2] est une vue en perspective, vue de dessous, du premier mode de réalisation non revendiqué d'un tel porte-bagage.
[Fig.3] est une vue en perspective, vue de dessus, d'un second mode de réalisation d'un porte-bagage non revendiqué.
[Fig. 4] est une vue en perspective, vue de dessous, du second mode de réalisation non revendiqué d'un tel porte-bagage.
[Fig. 5] est une de dessus du second mode de réalisation non revendiqué d'un tel porte-bagage.
[Fig. 6] est une vue en perspective d'une bague de serrage d'un tel porte-bagage équipant un cycle.
[Fig. 7] est une vue partielle en perspective du premier mode de réalisation non revendiqué du porte-bagage équipant un cycle.
[Fig. 8] est une vue en perspective du porte-bagage lors de son accrochage à un élément externe.
[Fig. 9] est une vue en perspective d'un cycle équipé du porte-bagage non revendiqué.
[Fig.10] est une vue en perspective, vue de dessus, d'un porte-bagage selon l'invention.
[Fig. 11] est une vue partielle en perspective du porte-bagage de l'invention équipant un cycle accroché à un élément externe.
[Fig. 12] est une vue partielle en perspective du porte-bagage de l'invention équipant un cycle et verrouillant sa roue arrière.
[Fig. 13] est une vue partielle en perspective du porte-bagage de l'invention équipant un cycle accroché à un élément externe et verrouillant sa roue arrière.
[Fig.14] est un schéma illustrant une étape d'un procédé de fabrication du porte bagage conforme à l'invention.
[Fig.15] est un schéma illustrant un axe escamotable anti-effraction du porte bagage.

### Description détaillée de l'invention

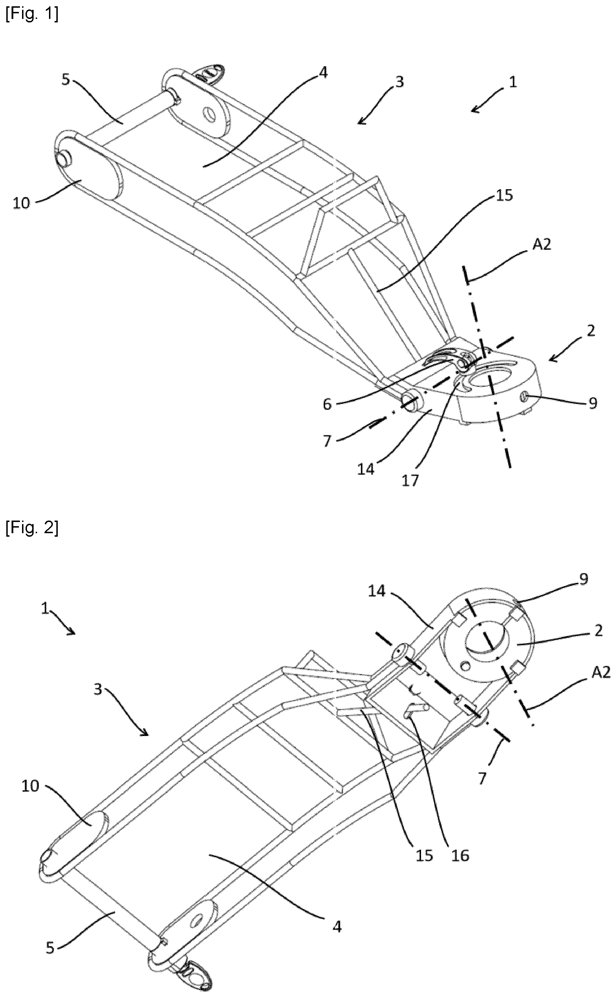

En référence aux figures 1 à 5 qui en illustrent deux modes de réalisation, il concerne un porte-bagage (1) pour cycles, amélioré en ce qu'il assure plusieurs fonctions : en effet, en plus de comporter une structure de réception (3) d'un bagage, il comprend un espace interne (4) apte à recevoir un élément externe (X), par exemple un poteau, une barrière ou tout autre mobilier urbain, de façon à immobiliser un cycle (11) équipé de ce porte bagage (1) lorsqu'on souhaite le stationner. En d'autres termes, le porte-bagage assure une fonction antivol de cycle.

À cet effet, l'espace interne (4) est délimité par la structure de réception (3) et est clos par un premier axe escamotable (5), entre une position d'ouverture de l'espace interne (4) autorisant le positionnement de l'élément externe (X) dans l'espace interne (4) et une position de fermeture de l'espace interne (4), verrouillable pour assurer une fonction antivol du cycle. Le verrouillage de la position fermée du premier axe escamotable (5) est assuré de toute manière appropriée, et par exemple par une serrure, telle qu'une serrure à clé ou à code.

Afin de pouvoir s'adapter au plus grand nombre de cycles possibles, le porte-bagage (1) est monté sur le cycle (11) au moyen d'une bague de serrage (2), qui est de préférence une bague circulaire. En choisissant judicieusement le diamètre de cette dernière, il est ainsi possible de monter le porte-bagage (1) sur tout cycle (11) présentant un élément de section circulaire. Il peut en particulier s'agir, à l'arrière du cycle (11), d'un tube de selle (12), d'une tige de selle (13), ou, à l'avant du cycle (11), d'une douille de direction (18).

Toujours dans un but de compatibilité, la bague de serrage (2) peut comprendre des cales, de préférence hémicirculaires, de façon à ce qu'une bague de serrage présentant un diamètre intérieur minimal donné puisse s'adapter à des éléments (12, 13, 18) de diamètre extérieur plus petit.

De préférence, le porte-bagage (1) est monté en haut du tube de selle (12), de façon à ce que le serrage de la bague de serrage (2) comprime et déforme le tube de selle (12), qui vient à son tour comprimer la tige de selle (13), verrouillant ainsi sa position dans le tube (12). De cette manière, le porte-bagage (1) remplit aussi la fonction de verrouillage de la selle du cycle.

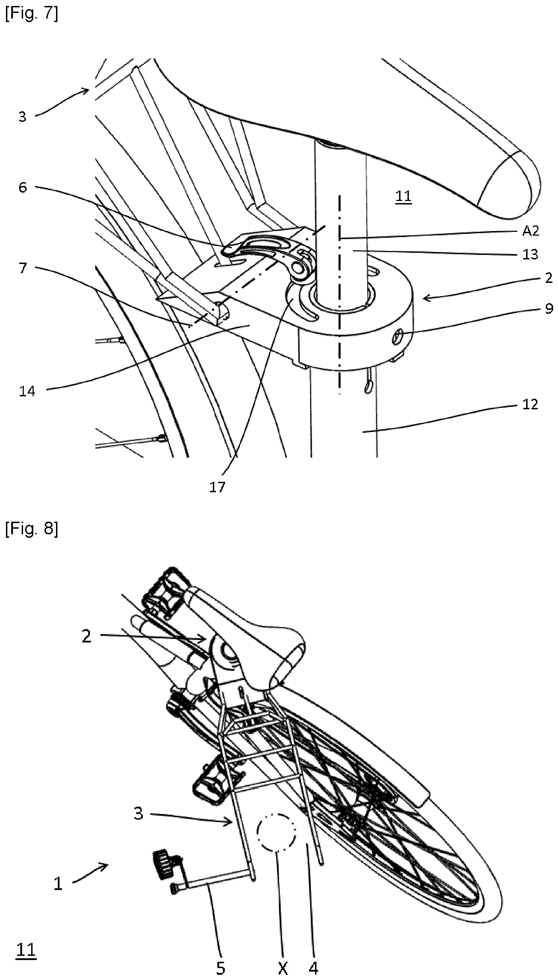

Comme illustré figure 8, afin de faciliter l'accrochage du porte-bagage (1) à un élément externe (X), celui-ci est avantageusement monté en liaison pivot avec le cycle (11), notamment, la liaison entre la bague de serrage (2) et la structure de réception (3) est une liaison pivot autour d'un axe (A2) de révolution de la bague de serrage (2), verrouillable en position par des moyens de blocage (6). Il est ainsi possible de stationner le cycle (11) à proximité dudit élément externe (X), puis de faire pivoter le porte-bagage (1) afin d'insérer cet élément externe (X) dans l'espace interne (4) du porte-bagage.

Dans un mode de réalisation non revendiqué, cette liaison pivot est réalisée par le montage d'une platine (14) venant coiffer la bague de serrage (2).

De façon à maintenir le porte-bagage (1) en position, les moyens de blocage (6) empêchent sa rotation par rapport à la bague de serrage (2). Il peut s'agir par exemple d'un levier à came, actionnable manuellement, venant pincer la platine (14) contre la bague de serrage (2). À cet effet, la bague de serrage (2) comprend un taraudage dans lequel est fixé le levier à came.

Le débattement angulaire de la liaison pivot autour de l'axe (A2) est délimité par une lumière (17) ménagée sur la platine (14) et de forme adéquate, par exemple oblongue et semi-circulaire, à travers laquelle est monté le levier à came.

La bague de serrage (2) est fixée sur le cycle (11) par la manipulation de moyens de serrage (8). De préférence, ces moyens de serrage (8) ne sont manipulables qu'avec un outil externe, tel qu'une clé six pans. Avantageusement, les moyens de serrage (8) présentent un profil correspondant à un profil de vis antivol, et ne sont alors manipulables qu'avec une clé spécifique. Ainsi, il n'est pas possible de démonter la bague de serrage (2) sans disposer de l'équipement nécessaire, ce qui permet de prévenir le vandalisme ou les vols du porte-bagage et de la selle, lorsque le cycle (11) est stationné sans surveillance, par exemple sur la voirie.

Selon un mode de réalisation non revendiqué, afin de sécuriser encore plus le démontage du porte-bagage, et donc d'améliorer encore la fonction d'antivol de la selle, les moyens de serrage (8) sont dissimulés, et ne sont accessibles que dans une certaine configuration du porte-bagage (1). Pour cela, la platine (14) coiffe la bague de serrage (2) et un orifice (9) est ménagé dans la platine (14) afin de pouvoir accéder aux moyens de serrage (8). L'orifice (9) est judicieusement disposé de manière à ce qu'il soit en regard des moyens de fixation (8) uniquement lorsque le porte-bagage (1) est complètement pivoté, c'est-à-dire lorsque les moyens de serrage (6) viennent à l'extrémité de la lumière (17) de la platine (14) par exemple.

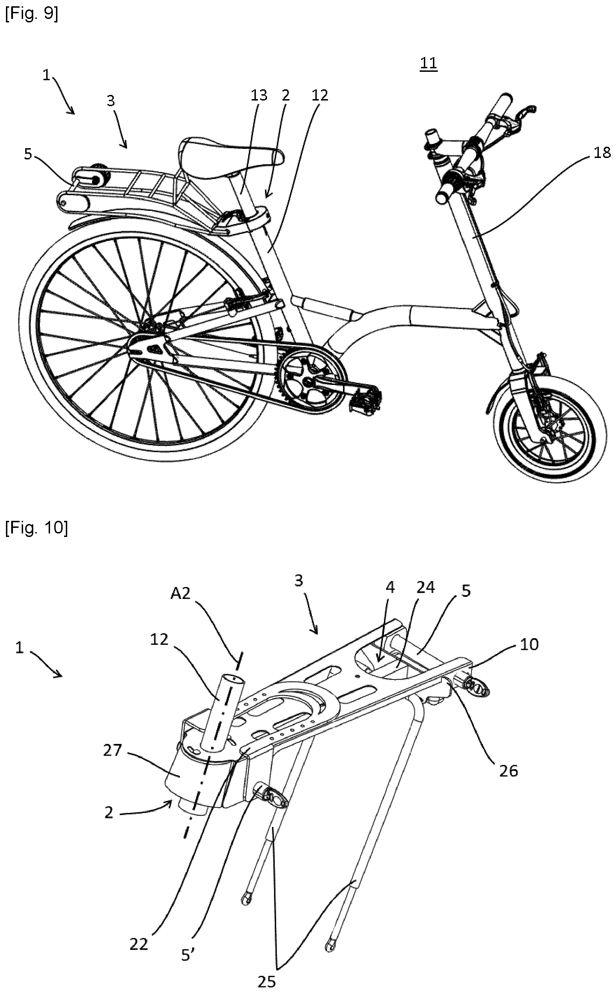

Dans un autre mode de réalisation illustré aux figures 10 à 13, la bague de serrage (2) se fixe sur la tige de selle au lieu du tube de selle, et le porte-bagage (1) présente une jupe (27) qui vient coiffer et dissimuler le dispositif préexistant de montage de la selle. En dissimulant le dispositif préexistant de montage de la selle, son vol est évité.

Afin de garantir l'horizontalité de la structure de réception (3) quel que soit la géométrie du cycle (11), et en particulier de l'angle que présente le tube de selle (12), il est possible de relier le porte-bagage (1) au cycle (11) avec une seconde liaison pivot, dont l'axe de rotation (7) est de préférence orthogonal à l'axe (A2). Cette seconde liaison pivot peut être réalisée au niveau de la liaison entre la structure de réception (3) et la platine (14).

En référence particulière aux figures 1 et 2, il peut par exemple s'agir de souder deux pitons à une première extrémité de la structure de réception (3), afin que ceux-ci s'insèrent dans des perçages débouchant de la platine (14).

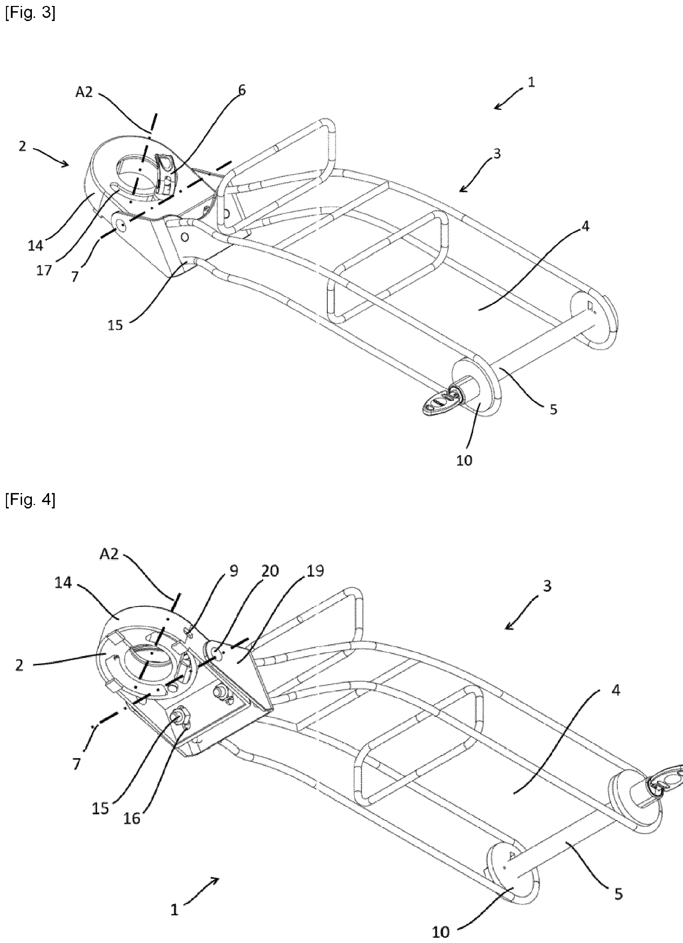

En référence particulière aux figures 3 à 5, la structure de réception (3) peut également comprendre un empattement (19) en forme de U qui vient coiffer la platine (14) et être relié à cette dernière au moyen de deux rivets (20).

Si la structure de réception (3) comprend une jambe de force (15) la reliant à la platine (14), cette dernière peut alors présenter un trou oblong (16) permettant le débattement de la jambe de force (15) par rapport à la platine (14). En particulier, le réglage de l'horizontalité de la structure de réception (3) est assuré par des écrous présents à l'extrémité de la jambe de force (15) qui est filetée. Dans le second mode de réalisation non revendiqué illustré aux figures 3 à 5, cette jambe de force (15) est doublée.

Afin de renforcer la structure de réception (3) au niveau de sa liaison avec le premier axe escamotable (5), des joues (10) peuvent être rajoutées. Il est en effet prévisible qu'en cas de tentative de vol du cycle (11), des vandales tenteront en particulier de s'attaquer à la liaison entre le premier axe escamotable (5) et la structure (3). Par exemple, lorsque le porte-bagage (1) est en position de roulage, la structure de réception (3) présente des flancs qui sont parallèles à l'axe de la roue arrière. Chaque flanc est équipé d'une joue (10) présentant un orifice permettant la réception du premier axe escamotable (5).

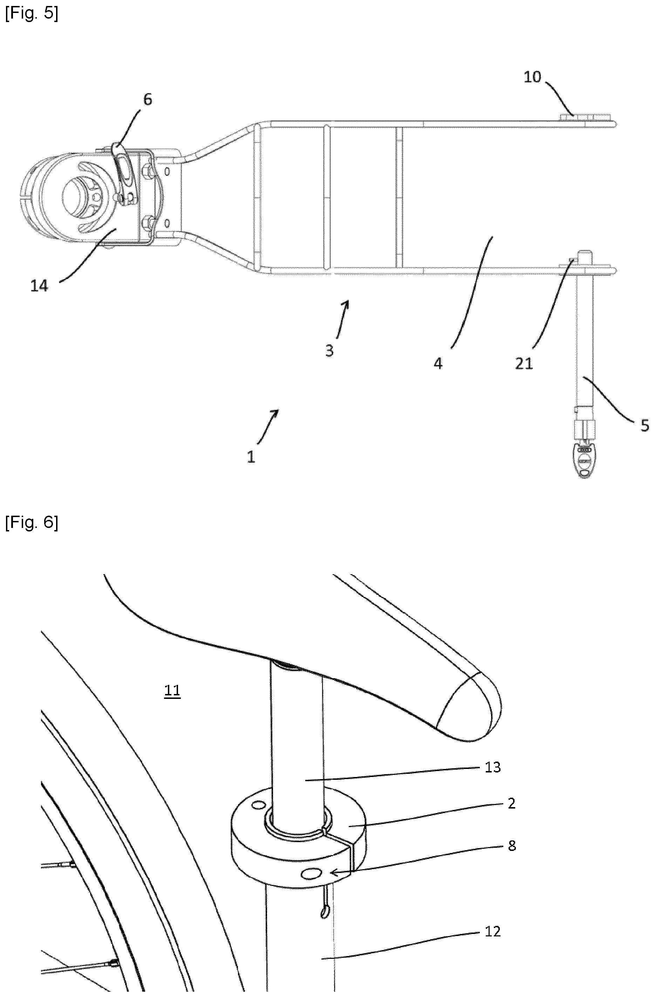

Au surplus, le premier axe escamotable (5) présente à son extrémité une goupille de sécurité transversale (21) visible figure 5. Lorsque le premier axe escamotable (5) est en position verrouillée, cette goupille empêche tout écartement des deux flancs la structure de réception (3), en retenant la joue (10) contre laquelle elle est plaquée.

Le porte bagage selon l'invention est illustré aux figures 10 à 13, dans lesquelles un antivol de roue (22), verrouillable au moyen d'un second axe escamotable (5'), est représenté.

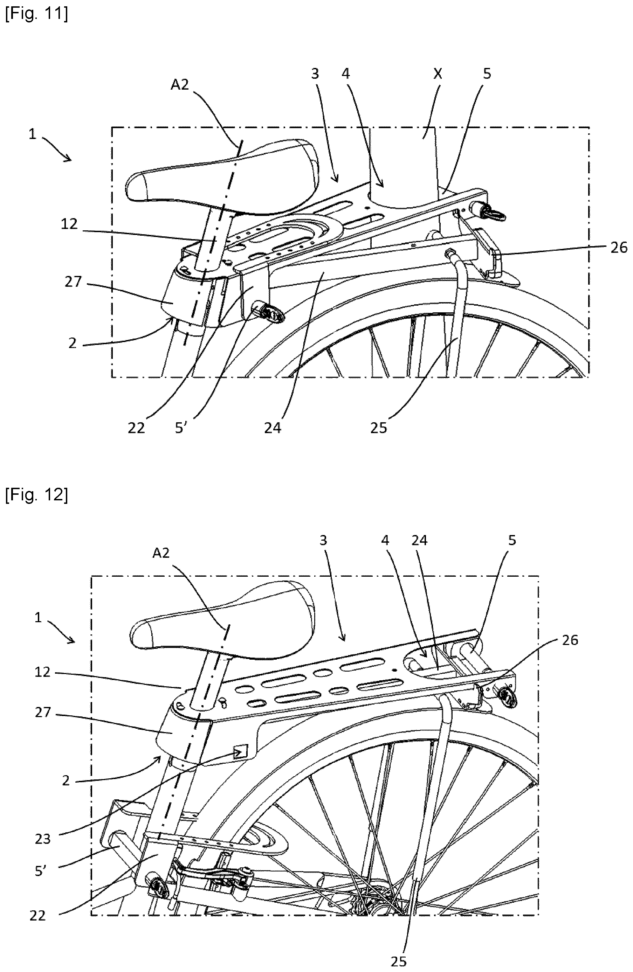

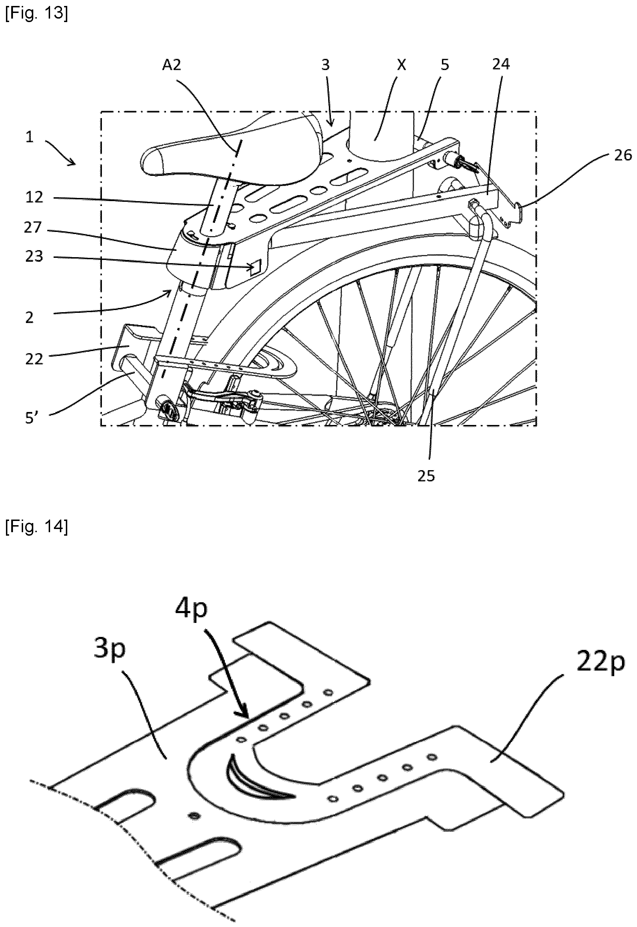

En référence aux figures 12 et 13, l'antivol de roue (22) comprend une ouverture permettant de recevoir un élément de la roue du cycle, et de préférence également un élément du cycle (11) tel que le cadre. L'axe escamotable (5') est conçu pour fermer l'ouverture de l'antivol de roue (22).

En référence aux figures 10 et 11, l'antivol de roue (22) est adapté en forme afin que lorsqu'il n'est pas utilisé, il vienne coiffer la structure de réception (3) des bagages dans une position de rangement. De cette manière, le rangement de l'antivol de roue (22) est très peu encombrant, et il est possible de disposer des bagages sur la structure de réception (3) même si l'antivol de roue (22) est rangé.

En référence aux figures 12 et 13, la structure de réception (3) comprend des orifices (23), destinés à recevoir le second axe escamotable (5'). De la sorte, lorsque l'antivol de roue (22) en position de rangement, sa position est verrouillée.

Selon l'invention, la structure de réception (3) et l'antivol de roue (22) sont fabriqués à partir d'un matériau métallique sous forme de plaque. Ce choix de matériau est économique car la fabrication peut alors être faite par découpe et pliage, en un nombre d'étapes de fabrication réduit et adapté aux petites et moyennes séries. Par rapport à une fabrication de type mécano-soudée de barres et de tiges des figures 1 à 9, le coût de fabrication est grandement réduit.

Au surplus, avec une conception astucieuse de la structure de réception (3) et de l'antivol de roue (22) fabriqués à partir d'un matériau métallique sous forme de plaque, il est possible de limiter les chutes de matière lors du procédé de fabrication. En référence à la figure 14, on voit un schéma de principe illustrant la structure de réception (3) et l'antivol de roue (22) en cours de fabrication, sous leurs formes développées respectives (3p, 22p).

Ce schéma correspond aux développés des pièces tels qu'obtenus en sortie de découpe, et avant conformage. On y voit que la structure de réception (3p) présente la découpe (4p) destinée à devenir, sur le porte bagage (1), l'espace interne (4).

Afin de ne pas gaspiller le métal issu de cette découpe (4p), l'antivol de roue (22) a été conçu pour être fabriqué à partir de la chute de la découpe (4p). Ainsi, on voit sur la figure 14 que le développé de l'antivol de roue (22p) s'insère dans le développé de la structure de réception (3p).

Dans un but d'augmenter la charge admissible par le porte bagage (1) celui-ci peut comprendre un longeron (24), fixé à la bague de serrage (2). Ce longeron (24) est destiné à supporter la structure de réception (3). Avantageusement, ce longeron (24) sert également de support pour un phare arrière, et de conduit pour les réseaux. De cette façon, le longerons s'étend le long de la structure et en support de celle-ci lorsqu'elle se trouve en position de réception des bagages.

Dans le cas où la structure de réception (3) est pivotante, le longeron (24) présente à son extrémité un doigt d'indexage (26) venant arrêter la rotation de la structure de réception (3) lorsque celle-ci est rabattue en direction de l'alignement avec le cycle (11), en position de roulage.

Toujours dans un but d'augmentation de la charge admissible, il est également possible de rajouter des jambes de force (25) reliant le longeron (24) à une partie fixe du cycle (11), par exemple le cadre ou encore le moyeu de la roue arrière.

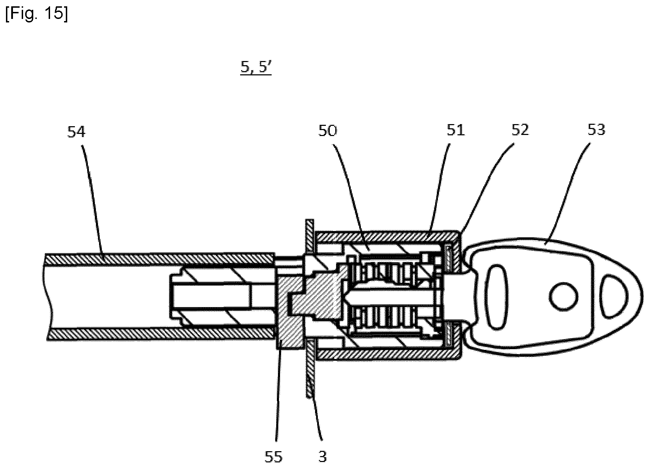

En référence à la figure 15, le premier axe escamotable (5) et/ou le second axe escamotable (5') sont équipés de moyens anti-effraction, en particulier à l'encontre d'attaques à la perceuse.

Ce type d'attaques consiste à détruire des goupilles du mécanisme de la serrure (50), en utilisant une perceuse munie d'une mèche de faible diamètre (par exemple 3mm), et en perçant le mécanisme de la serrure (50) parallèlement à l'axe d'introduction de la clé (53).

Afin de compliquer la réalisation de ce type d'attaques, la serrure (50) des axes (5, 5') est coiffée par un capuchon (51) qui est maintenu collé sur la serrure (50), et qui encapsule une pastille (52). La pastille (52) est libre en rotation à l'intérieur d'un espace entre le capuchon (51) et la serrure (50).

De cette manière, si un voleur essaye de percer le mécanisme de la serrure (50), la pastille (52) est entrainée en rotation par la mèche de la perceuse, qui ne peut alors plus couper le matériau de la serrure (50). La tentative d'effraction est ainsi empêchée.

Bien entendu, la pastille (51) comprend une fente pour le passage de clef (53). Toutefois, la largeur de cette fente est réduite au strict minimum, c'est-à-dire l'épaisseur de la clé (53), afin qu'elle présente une largeur réduite, par exemple 2mm.

De cette manière, si un voleur souhaite s'affranchir de la complication liée à la libre rotation de la pastille (52), il sera obligé d'utiliser une mèche de diamètre inférieur ou égale à la largeur de la fente, donc une mèche fragile. Afin de ne pas détériorer la mèche, le voleur sera contraint de prendre des précautions augmentant la durée du vol, ce qui est un but recherché dans le domaine des antivols.

Au surplus, la pastille (52) et/ou le capuchon (51) sont réalisés préférentiellement en matériaux durs présentant une résistance au perçage, du type acier trempé, inox, titane ou matériaux composites armés, sans que cette liste ne soit limitative.

Toujours afin de compliquer l'effraction, les axes (5, 5') ne sont pas bloqués en rotation lorsqu'ils sont en position verrouillée sur la structure de réception (3). En effet, le retrait desdits axes (5, 5') est empêché par le pêne (55) de la serrure (50), mais les axes (5, 5') sont libres en rotation par rapport à la structure (3).

De cette manière, si un voleur essaye de percer la serrure (50), l'axe (5, 5') peut entrer en rotation par rapport à la structure (3), ce qui impose que le voleur doive maintenir l'axe (5, 5') pour que la mèche de la perceuse puisse fonctionner. La tentative d'effraction est alors compliquée.

L'invention concerne également un cycle (11) comprenant un tube de selle (12) et équipé d'un porte-bagage (1). Selon le mode de réalisation préféré représenté, le porte-bagage (1) selon l'invention remplit cinq fonctions à la fois : celles de porte-bagage, d'antivol du cycle (11), de verrouillage de la selle du cycle, d'antivol d'une roue, et d'antivol de la selle. Le cycle (11) obtenu présente donc l'avantage de n'avoir qu'une faible augmentation de sa masse embarquée pour la réalisation de toutes ces fonctions. Ceci est bien entendu avantageux pour la facilité de la propulsion du cycle (11).

Par ailleurs, le porte-bagage (1) peut être conformé différemment des figures sans sortir du cadre de l'invention, qui est défini par les revendications. En particulier, l'espace interne (14) peut être conformé différemment, avec le premier axe escamotable (5) disposé sur un flanc plutôt que sur l'arrière du porte-bagage. Cela permet notamment de ne pas avoir à faire reculer le cycle (11) pour insérer l'élément externe (X) dans l'espace interne (4) : une simple rotation du porte bagage (1) suffit.

En variante non représentée, les moyens de serrage (6) ne sont pas un levier à came mais tout autre moyen adapté, avantageusement manipulables à la main, sans outil externe, tels qu'un bouton moleté.

En variante non représentée, le porte-bagage (1) n'est pas monté à l'arrière du cycle (11) mais à l'avant, auquel cas la bague de serrage (2) est montée sur un autre élément de la structure du cycle (11), comme la douille de direction (18) ou bien la potence.

En variante non représentée la bague de serrage (2) présente une paroi interne de section non circulaire, afin de s'adapter à des éléments non circulaires d'un cycle (11). Certains cycles présentent en effet un tube de selle (12) ou une douille de direction (18) dont la section est sensiblement rectangulaire. La bague de serrage (2) peut alors se présenter sous la forme d'une bride, et éventuellement être en deux parties.

## Revendications

1. Porte-bagage (1) pour cycle comprenant une bague de serrage (2) reliée à une structure de réception (3) d'un bagage, la bague de serrage (2) est adaptée pour être montée autour d'un élément d'un cycle (11) et soutenir la structure de réception (3), la structure de réception (3) comprenant un espace interne (4) susceptible de recevoir un élément externe (X) tel qu'un poteau de mobilier urbain, et comprenant un premier axe escamotable (5) entre une position d'ouverture de l'espace interne (4) autorisant le positionnement de l'élément externe (X) dans l'espace interne (4) et une position de fermeture de l'espace interne (4), verrouillable pour assurer une fonction antivol du cycle, ***caractérisé en* ce qu'il** comprend un antivol de roue (22) comprenant une ouverture de réception d'une partie d'une roue et un second axe escamotable (5'), apte à passer d'une position de fermeture à une position d'ouverture de l'antivol de roue (22), l'antivol de roue (22) est configuré pour coiffer la structure de réception (3) dans une position de rangement, **et *en* ce *que,* la** structure de réception (3) comprend des orifices (23) destiné à recevoir le second axe escamotable (5') dans la position de rangement, **et *en ce que*** la structure de réception (3) et l'antivol de roue (22) sont fabriqués à partir d'un matériau métallique sous forme de plaque, et sous leurs formes développées respectives (22p, 3p), le développé de l'antivol de roue (22p) s'insère dans le développé de la structure de réception (3p).

2. Porte-bagage (1) selon la revendication 1, ***caractérisé* en ce que** la liaison entre la bague de serrage (2) et la structure de réception (3) est une liaison pivot autour d'un axe (A2) de révolution de la bague de serrage (2), verrouillable en position par des moyens de blocage (6).

3. Porte-bagage (1) selon la revendication 1, ***caractérisé* en ce que** la bague de serrage (2) est adaptée pour être montée sur un tube de selle (12) d'un cycle (11), et **en ce qu'**elle comprend des moyens de serrage (8) pour serrer et déformer le tube de selle (12) afin de verrouiller le montage d'une tige de selle (13) montée dans le tube de selle (12).

4. Porte-bagage (1) selon la revendication 1, ***caractérisé* en ce que** la structure de réception (3) présente une première extrémité recevant la bague de serrage (2) et une seconde extrémité prolongée par deux flancs parallèles recevant transversalement le premier axe escamotable (5), les flancs étant avantageusement renforcés par la présence de joues (10) au niveau de la seconde extrémité.

5. Porte-bagage (1) selon la revendication 1, ***caractérisé en* ce qu'il** comprend un longeron (24) fixé à la bague de serrage.

6. Porte-bagage (1) selon la revendication 5, ***caractérisé en* ce qu'il** comprend des jambes de forces (25) reliées d'une part au longeron (24), et d'autre part à une partie fixe du cycle (11), telle que le cadre ou un moyeu de la roue

7. Porte bagage (1) selon l'une des revendications précédentes, ***caractérisé en* ce *que*** l'axe escamotable comprend une serrure (50) coiffée par un capuchon (51) délimitant un espace entre la serrure (50) et le capuchon (51), lequel espace reçoit une pastille (52) présentant une fente pour le passage d'une clé (53) de la serrure (50), et la pastille (52) est en libre rotation au sein de l'espace.

8. Porte bagage (1) selon l'une des revendications précédentes, ***caractérisé en* ce *que*** l'axe escamotable est monté en libre rotation autour de son axe longitudinal sur la structure de réception (3), lorsqu'il est en position de fermeture de l'espace interne (4).

9. Procédé de fabrication d'un porte-bagage (1) selon la revendication 1, dans lequel la structure de réception (3) et l'antivol de roue (22) sont découpées dans une même plaque avant d'être conformés.

10. Cycle (11) équipé d'un porte-bagage (1) selon l'une des revendications 1 à 8.

## Patentansprüche

1. Gepäckträger (1) für ein Fahrrad, umfassend einen Klemmring (2), der mit einer Aufnahmestruktur (3) für Gepäck verbunden ist, wobei der Klemmring (2) dazu eingerichtet ist, um ein Element eines Fahrrads (11) herum montiert zu werden und die Aufnahmestruktur (3) zu tragen, wobei die Aufnahmestruktur (3) einen Innenraum (4) umfasst, der geeignet ist, ein externes Element (X), wie z. B. einen Pfosten eines Stadtmöbels, aufzunehmen, und wobei sie einen ersten zurückziehbaren Verriegelungsbolzen (5) umfasst zwischen einer Offenstellung des Innenraums (4), die das Positionieren des externen Elements (X) im Innenraum (4) erlaubt, und einer Schließstellung des Innenraums (4), die verriegelbar ist, um eine Diebstahlschutzfunktion für das Fahrrad bereitzustellen, **dadurch gekennzeichnet, dass** sie ein Radschloss (22) umfasst, das eine Aufnahmeöffnung für einen Teil eines Rades und einen zweiten zurückziehbaren Verriegelungsbolzen (5') aufweist, der zwischen einer Schließstellung und einer Offenstellung des Radschlosses (22) bewegbar ist, wobei das Radschloss (22) so ausgebildet ist, dass es die Aufnahmestruktur (3) in einer Verstauposition überkappt, und dass die Aufnahmestruktur (3) Öffnungen (23) umfasst, die zur Aufnahme des zweiten zurückziehbaren Verriegelungsbolzens (5') in der Verstauposition vorgesehen sind, und dass die Aufnahmestruktur (3) und das Radschloss (22) aus einem metallischen Blechwerkstoff hergestellt sind und in ihren jeweiligen abgewickelten Formen (22p, 3p) die Abwicklung des Radschlosses (22p) in der Abwicklung der Aufnahmestruktur (3p) verschachtelt ist.

2. Gepäckträger (1) nach Anspruch 1, **dadurch gekennzeichnet, dass** die Verbindung zwischen dem Klemmring (2) und der Aufnahmestruktur (3) eine Drehverbindung um eine Achse (A2) der Drehachse des Klemmrings (2) ist, die mittels Verriegelungsmitteln (6) in Position arretierbar ist.

3. Gepäckträger (1) nach Anspruch 1, **dadurch gekennzeichnet, dass** der Klemmring (2) dazu eingerichtet ist, an einem Sitzrohr (12) eines Fahrrads (11) montiert zu werden, und dass er Klemmmittel (8) umfasst, um das Sitzrohr (12) zu klemmen und zu verformen, um die Montage einer im Sitzrohr (12) eingesetzten Sattelstütze (13) zu verriegeln.

4. Gepäckträger (1) nach Anspruch 1, **dadurch gekennzeichnet, dass** die Aufnahmestruktur (3) ein erstes Ende aufweist, das den Klemmring (2) aufnimmt, und ein zweites Ende, das durch zwei parallele Flanken verlängert ist, die den ersten zurückziehbaren Verriegelungsbolzen (5) quer aufnehmen, wobei die Flanken vorteilhaft durch die Anwesenheit von Wangen (10) im Bereich des zweiten Endes verstärkt sind.

5. Gepäckträger (1) nach Anspruch 1, **dadurch gekennzeichnet, dass** er einen Längsträger (24) umfasst, der am Klemmring befestigt ist.

6. Gepäckträger (1) nach Anspruch 5, **dadurch gekennzeichnet, dass** er Streben (25) umfasst, die einerseits mit dem Längsträger (24) und andererseits mit einem festen Teil des Fahrrads (11), wie dem Rahmen oder einer Radnabe, verbunden sind.

7. Gepäckträger (1) nach einem der vorhergehenden Ansprüche, **dadurch gekennzeichnet, dass** der zurückziehbare Verriegelungsbolzen ein Schloss (50) umfasst, das von einer Kappe (51) überdeckt ist, die einen Zwischenraum zwischen dem Schloss (50) und der Kappe (51) definiert, welcher Zwischenraum eine Scheibe (52) aufnimmt, die einen Schlitz für den Durchgang eines Schlüssels (53) des Schlosses (50) aufweist, und dass die Scheibe (52) innerhalb des Zwischenraums frei drehbar ist.

8. Gepäckträger (1) nach einem der vorhergehenden Ansprüche, **dadurch gekennzeichnet, dass** der zurückziehbare Verriegelungsbolzen in der Schließstellung des Innenraums (4) an der Aufnahmestruktur (3) frei um seine Längsachse drehbar gelagert ist.

9. Verfahren zur Herstellung eines Gepäckträgers (1) nach Anspruch 1, bei dem die Aufnahmestruktur (3) und das Radschloss (22) vor dem Umformen aus demselben Blech ausgeschnitten werden.

10. Fahrrad (11), ausgerüstet mit einem Gepäckträger (1) nach einem der Ansprüche 1 bis 8.

## Claims

1. A luggage carrier (1) for a cycle comprising a clamping collar (2) connected to a receiving structure (3) for luggage, the clamping collar (2) being adapted to be mounted around an element of a cycle (11) and to support the receiving structure (3), the receiving structure (3) comprising an internal space (4) suitable for receiving an external element (X) such as a post of street furniture, and comprising a first retractable locking pin (5) between an open position of the internal space (4) allowing the external element (X) to be positioned in the internal space (4) and a closed position of the internal space (4), which is lockable to provide an anti-theft function for the cycle, **characterized in that** it comprises a wheel lock (22) comprising an opening for receiving a portion of a wheel and a second retractable locking pin (5'), able to move from a closed position to an open position of the wheel lock (22), the wheel lock (22) being configured to cap the receiving structure (3) in a stowed position, and **in that** the receiving structure (3) comprises orifices (23) intended to receive the second retractable locking pin (5') in the stowed position, and **in that** the receiving structure (3) and the wheel lock (22) are made from a metallic sheet material, and, in their respective developed (flat) forms (22p, 3p), the flat pattern of the wheel lock (22p) nests within the flat pattern of the receiving structure (3p).

2. The luggage carrier (1) according to claim 1, **characterized in that** the connection between the clamping collar (2) and the receiving structure (3) is a pivot connection about an axis (A2) of revolution of the clamping collar (2), lockable in position by locking means (6).

3. The luggage carrier (1) according to claim 1, **characterized in that** the clamping collar (2) is adapted to be mounted on a seat tube (12) of a cycle (11), and **in that** it comprises clamping means (8) for tightening and deforming the seat tube (12) in order to lock the mounting of a seat post (13) installed in the seat tube (12).

4. The luggage carrier (1) according to claim 1, **characterized in that** the receiving structure (3) has a first end receiving the clamping collar (2) and a second end extended by two parallel side walls that transversely receive the first retractable locking pin (5), the side walls being advantageously reinforced by the presence of cheek plates (10) at the second end.

5. The luggage carrier (1) according to claim 1, **characterized in that** it comprises a longitudinal beam (24) fastened to the clamping collar.

6. The luggage carrier (1) according to claim 5, **characterized in that** it comprises struts (25) connected, on the one hand, to the longitudinal beam (24), and, on the other hand, to a fixed part of the cycle (11), such as the frame or a wheel hub.

7. The luggage carrier (1) according to any one of the preceding claims, **characterized in that** the retractable locking pin comprises a lock (50) capped by a cover (51) defining a space between the lock (50) and the cover (51), which space receives a disc (52) having a slot for the passage of a key (53) of the lock (50), and the disc (52) is freely rotatable within the space.

8. The luggage carrier (1) according to any one of the preceding claims, **characterized in that** the retractable locking pin is mounted for free rotation about its longitudinal axis on the receiving structure (3) when it is in the closed position of the internal space (4).

9. A method of manufacturing a luggage carrier (1) according to claim 1, in which the receiving structure (3) and the wheel lock (22) are cut from the same sheet before being formed.

10. A cycle (11) equipped with a luggage carrier (1) according to any one of claims 1 to 8.
